Europäisches Patentamt

(19) European Patent Office

Office européen des brevets

(11) Numéro de publication: **0 000 801**

**B1**

(12) **FASCICULE DE BREVET EUROPEEN**

(21) Numéro de dépôt: **78200127.5**

(22) Date de dépôt: **03.08.78**

(51) Int. Cl.³: **B 29 C 17/07**

(54) **Procédé pour la production de corps creux orientés.**

(30) Priorité: **08.08.77 FR 7724579**

(43) Date de publication de la demande:
**21.02.79 Bulletin 79/4**

(45) Mention de la délivrance du brevet:
**28.01.81 Bulletin 81/4**

(84) Etats Contractants Désignés:
**BE CH DE FR GB LU NL SE**

(56) Documents cités:
FR - A - 2 005 138
FR - A - 2 013 855
FR - A - 2 021 521
FR - A - 2 062 304
FR - A - 2 098 332
FR - A - 2 236 634
FR - A - 2 345 280
FR - A - 2 261 117
FR - A - 2 263 874
FR - A - 2 293 297
FR - A - 2 297 127
FR - A - 3 833 332
FR - A - 3 973 941

(73) Titulaire: **SOLVAY & Cie (Société Anonyme)**
**Rue du Prince Albert, 33**
**B-1050 Bruxelles (BE)**

(72) Inventeur: **Hubert, Guy**
**Chaussée de Rixensart, 18**
**B-1338 Lasne-Chapelle-Saint-Lambert (BE)**
(72) Inventeur: **Michel, Edmond**
**Marienborre, 11**
**B-1120 Bruxelles (BE)**

(74) Mandataire: **Eischen, Roland**
**Solvay & Cie Département de la Propriété**
**Industrielle Rue de Ransbeek 310**
**B-1120 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé pour la production de corps creux orientés

La présente invention concerne un procédé pour la production de corps creux orientés en matière thermoplastique, tels que des bouteilles et articles similaires, dont le col comporte une bague d'orifice à sa partie supérieure permettant l'application d'une fermeture étanche.

Il est bien connu de produire des corps creux en matière thermoplastique qui présentent des propriétés mécaniques sensiblement améliorées en recourant à des techniques de production conduisant à une orientation, de préférence biaxiale, des macromolécules constituant leur paroi. Selon une technique courante de production de pareils corps creux, qui est décrite notamment dans les demandes de brevet français 2 261 117 du 12 février 1974, 2 263 874 du 15 mars 1974, 2 297 127 du 30 octobre 1975 et 2 345 280 du 22 mars 1976 déposées au nom de SOLVAY & Cie, on souffle d'abord des préformes, de forme générale cylindrique, comportant généralement un fond fermé et un col moulé dans sa forme définitive. Ces préformes sont ensuite conditionnées thermiquement de façon à les amener à une température optimale pour l'orientation par étirage. Puis, ces préformes conditionnées sont soufflées en vue de leur conférer la forme des corps creux désirés. Le diamètre des préformes et leur longueur sont choisis pour qu'elles soient fortement étirées, de préférence biaxialement, durant le soufflage final.

Comme il est généralement indispensable que les corps creux produits selon cette technique puissent être dotés d'une fermeture parfaitement étanche, leurs cols sont moulés habituellement, non pas lors du soufflage final, mais lors du soufflage des préformes. En effet, comme la matière thermoplastique se trouve à température relativement élevée lors du soufflage des préformes, on peut mouler le col en assurant une fidélité parfaite des détails et un calibrage précis de l'orifice.

Malheureusement, le moulage définitif du col, lors du soufflage des préformes présente de sérieux inconvénients. Ainsi, lorsque la zone de col ne présente pas de symétrie de révolution, apr exemple parce qu'elle est filetée, il faut prendre des précautions spéciales pour transférer les préformes sans endommager le col et les positionner correctement dans le moule de soufflage final. En outre, la matière thermoplastique est mal utilisée au niveau du col puisque la paroi a nécessairement une épaisseur presque égale à celle de la paraison tubulaire de départ et présente des propriétés peu intéressantes puisqu'elle n'est pas orientée.

Pour pallier ces inconvénients il a été proposé, ainsi qu'il est décrit dans la demande de brevet français 2 293 297 déposée le 4 décembre 1974 au nom de CARNAUD TOTAL INTERPLASTIC, de réaliser le moulage du col du corps creux totalement lors du moulage par soufflage final. On a toutefois constaté que la moulage du col lors de cette dernière étape est malaisé car il est effectué à une température relativement basse et la matière plastique ne se trouve plus à une température optimale de moulage. On est dès lors souvent amené à devoir recourir à des techniques complexes telles que celles décrites dans la demande de brevet français 2 005 138 déposée le 28 mars 1969 au nom de HERCULES INC. ou dans la demande de brevet français 2 062 304 déposée le 17 septembre 1970 au nom de R. BOSCH GmbH pour obtenir un moulage plus correct du col.

Dans le brevet Etats-Unis 3 833 332 déposé le 17 novembre 1972 aux noms de R. et S. AMBERG, on décrit, par ailleurs, un dispositif pour le moulage de préformes gerbables en des récipients non orientés moléculairement ayant un col fileté dans lequel les préformes sont réchauffées à température de moulage et sont ensuite mises en forme par soufflage dans un moule approprié. Les préformes utilisées présentent un rebord externe périphérique qui est exploité pour le maintien de la préforme durant le chauffage et le formage final et peut être éliminé après ce dernier formage. Dans cette technique, le rebord de la préforme risque d'être déformé durant le chauffage et durant le formage final.

La Demanderesse a maintenant trouvé un procédé qui, tout en permettant la fermeture parfaitement étanche des corps creux produits, porte remède aux inconvénients précités de la technique habituelle de manière remarquablement simple.

La présente invention concerne dès lors un procédé pour la production de corps creux orientés en matière thermoplastique dont le col comporte une bague d'orifice à sa partie supérieure et une partie inférieure moulée, dans lequel on moule par soufflage des préformes à partir d'une paraison tubulaire chaude de matière thermoplastique, on conditionne thermiquement les préformes à une température susceptible d'induire l'orientation de la matière thermoplastique lors de son étirage, et on souffle les préformes dans des moules de soufflage final et dans lequel on moule la bague d'orifice dans sa forme définitive lors du moulage par soufflage des préformes et l'on moule la partie inférieure du col lors du soufflage final.

La forme et les dimensions de la bague d'orifice ne sont pas critiques et sont choisies, en général, en fonction de la fermeture que l'on souhaite utiliser sur les corps creux produits. Ainsi, la bague peut avoir un profil arrondi à sa partie supérieure et à angle droit à sa partie inférieure lorsqu'on souhaite fermer les corps creux par des capsules métalliques. Pour d'autres types de fermetures, telles que les bouchons à visser, la bague peut avoir une section circulaire ou rectangulaire par exemple. En général, la hauteur de la bague est comprise entre 1 et 10 mm et son épaisseur entre 0,5 et 5 mm.

Dans le procédé selon l'invention, la bague d'orifice peut être moulée avec une très grande précision puisque la matière thermoplastique peut être portée à sa température idéale pour assurer la fidélité des détails et la précision du calibrage lors de la production des préformes. Par ailleurs, le transfert des préformes ne pose plus de problème et leur positionnement dans le moule de soufflage final est fortement simplifié puisque la bague d'orifice peut posséder sans inconvénient une symétrie de revolution. De ce fait, le problème du positionnement angulaire des préformes est éliminé et il suffit de veiller au positionnement en hauteur qui peut être très simple puisqu'il peut même se faire par gravité. Enfin, le procédé selon la présente invention donne la possibilité d'étirer la partie inférieure du col lors de son moulage au cours du soufflage final.

Les préformes utilisables pour réaliser le procédé selon l'invention peuvent se présenter sous une forme quelconque pour autant qu'elles comportent dans la partie supérieure de leur col, dans la zone voisine de l'ouverture du corps creux, une bague d'orifice moulée dans sa forme définitive.

Suivant un mode de réalisation préféré, les préformes sont pourvues d'un faux goulot situé au dessus de la bague d'orifice. Ce faux goulot est éliminé soit avant, soit après le soufflage final. Généralement, on recycle par broyage la matière thermoplastique qui le constitue. Ce faux goulot peut être avantageusement exploité pour le soufflage de la préforme au moyen d'une aiguille, ou le transfert et le positionnement des préformes. Le faux goulot peut être fermé ou ouvert, suivant la technique de soufflage mise en oeuvre pour le moulage des préformes, et il peut être pourvu de nervures, de rainures et d'ergots en fonction de l'exploitation qu'on souhaite en faire.

Suivant un mode de réalisation également préféré, les préformes exploitées présentent un fond fermé hémisphérique et un corps de forme générale cylindrique. Le diamètre maximum des préformes est de préférence compris entre 20 et 80% du diamètre maximum des corps creux orientés produits à partir de ces préformes. Leur hauteur peut être égale à celle des corps creux désirés mais, en général, on préfère que la hauteur des préformes soit comprise entre 20 et 80% de la hauteur des corps creux orientés produits à partir de ces préformes.

Les préformes sont moulées à partir d'une paraison tubulaire chaude de matière thermoplastique dont la production ne présente aucune difficulté particulière et peut être assurée par une boudineuse conventionnelle.

La technique exploitée pour le moulage par soufflage des préformes peut être quelconque pour autant qu'elle permette la réalisation d'une bague d'orifice moulée avec précision dans sa forme définitive. Ainsi, on peut avantageusement recourir au procédé décrit dans le brevet belge 826 676 déposé le 14 mars 1975 par la Demanderesse, qui se rapporte précisément à la production de préformes équipées d'un fond fermé hémisphérique. On peut s'y référer pour la production des préformes utilisables selon l'invention en tenant évidemment compte que le col des préformes ne doit pas être moulé dans sa totalité mais doit comporter uniquement une bague d'orifice à sa partie supérieure.

Suivant une variante préférée du procédé selon l'invention, le faux goulot, que l'on ménage de préférence sur les préformes, est conservé durant l'operation de soufflage final et déborde, au moins dans sa partie supérieure, du moule de soufflage final. De cette façon le faux goulot peut être exploité pour assurer l'introduction de la préforme dans le moule de soufflage final ainsi que l'extraction positive du corps creux orienté produit au moyen d'un organe de préhension agissant au niveau du faux goulot. Le faux goulot peut, dans ce cas, être éliminé ultérieurement par une opération de décolletage. A cet effet, on peut avantageusement exploiter des appareillages de décolletage tels que ceux décrits dans les brevets belges 673 913 du 17.12.1975, 774 525 du 27.10.1071 et 809 448 du 7.1.1974 déposés au nom de la Demanderesse. A cet effet, on peut utilement ménager une rainure faisant un angle sur la préforme entre la bague d'orifice et le faux goulot de manière à faciliter l'action de l'outil de décolletage. Pour le décolletage, le positionnement peut avantageusement être assuré par le faux goulot lui-même.

Lorsque le soufflage final des préformes conditionnées est réalisé au moyen d'une tuyère de soufflage qui s'insère dans les préformes et que les préformes sont du type à faux goulot fermé, il convient évidemment de prévoir, avant le soufflage final, une découpe des faux goulots en vue de ménager une ouverture permettant l'insertion des tuyères de soufflage dans les préformes.

Il est avantageux que le moulage des préformes soit mis à profit pour conditionner les préformes produites en les refroidissant ou, au moins, pour initier le conditionnement thermique. Ce résultat peut notamment être atteint en équipant les moules de préformes de moyens appropriés tels que des conduites de fluide réfrigérant.

Le conditionnement thermique peut être réalisé ou poursuivi par les moyens habituels, et par exemple dans une ou plusieurs enceintes thermostatisées dans lesquelles les préformes séjournent après leur démoulage et avant leur introduction dans les moules de soufflage.

Le conditionnement thermique peut consister à refroidir les préformes de façon à les amener dans la gamme de températures souhaitées, ou à les refroidir plus fortement et à les réchauffer ensuite pour les amener dans cette même gamme. La température est choisie évidemment en fonction de la nature de la matière thermoplastique.

Par le conditionnement thermique, on peut amener les préformes à une température uniforme sur toute leur hauteur utile ou sur toute leur épaisseur. On peut aussi réaliser une programmation thermique le long de préformes. Ainsi, il peut être avantageux de porter la région des préformes située juste en dessous de la bague d'orifice à une température légèrement plus élevée que le reste des préformes de façon à favoriser l'étirage et, partant, l'amincissement de cette région lors du soufflage final.

Lors du conditionnement thermique des préformes, il n'est évidemment pas nécessaire de traiter les faux goulots ainsi que les bagues d'orifice puisque les premières sont éliminées ultérieurement et que les secondes sont moulées dans leur forme définitive.

Après avoir été conditionnées thermiquement, les préformes sont introduites dans les moules de soufflage final où on leur confère la forme définitive des corps creux orientés désirés et où on procède notamment au moulage de la partie inférieure du col, au dessous de la bague d'orifice.

Suivant un mode préféré de réalisation du procédé selon l'invention, le soufflage final est réalisé au moyen d'une tuyère de soufflage qui est insérée dans les préformes et qui est conçue de façon à participer à l'étirage axial des préformes avant ou pendant leur soufflage. Il est particulièrement avantageux d'exploiter, à cet effet, la technique de soufflage qui est décrite dans le brevet belge 838 910 du 25.2.1976 au nom de la Demanderesse.

Lors du soufflage final, il convient de positionner correctement la bague d'orifice des préformes das un logement prévu dans l'empreinte des moules en évitant toute détérioration de cette bague.

L'étanchéité entre les tuyères de soufflage et les préformes lors du soufflage final peut être assurée par appui de la tuyère directement sur la bague d'orifice. La tuyère peut également s'appuyer sur le faux goulot des préformes et plus particulièrement sur sa partie inférieure. Les tuyères de soufflage peuvent, dans ces deux cas, être exploitées simultanément pour assurer le calibrage interne des cols.

La forme conférée à la partie inférieure du col du soufflage final peut être quelconque. La moulure peut notamment consister en un filetage. Toutefois, comme le matériau constitutif des préformes se trouve, lors du soufflage final, à des températures relativement écartées de la température idéale pour mouler des détails, il est préférable, dans la mesure du possible, d'éviter de former des moulures présentant des rayons de courbures très faibles, par exemple inférieurs à 1 mm.

Le procédé selon l'invention peut être utilisé pour produire des corps creux orientés à partir de n'importe quelle matière thermoplastique pouvant être orientée moléculairement par étirage. A titre d'exemples de ces dernières, on peut citer les résines à teneur prépondérante en chlorure de vinyle, les polyoléfines, les copolymères acryliques à haute teneur en nitrile acrylique, les polyesters thermoplastiques tels que le polytéréphtalate d'éthylène-glycol, et les polycarbonates.

Le procédé suivant l'invention peut être facilement réalisé au moyen d'un appareillage simple comportant des moules pour le moulage des préformes, dont l'empreinte assure le moulage de la bague d'orifice dans sa forme définitive, et des moules de soufflage final dont l'empreinte assure le logement précis de la bague d'orifice et le moulage de la partie inférieure du col.

On peut très avantageusement utiliser un appareillage dérivé, mutatis mutandis, de celui décrit dans le brevet belge 837 324 déposé le 6.1.1976 par la Demanderesse. Dans ce cas, l'appareillage comprend une machine de soufflage de préformes qui est alimentée par une paraison tubulaire continue de matière thermoplastique et dont les moules alignés bout à bout de façon jointive sur un premier support rotatif présentent des empreintes appropriées permettant la production d'un faux goulot, un dispositif de conditionnement thermique amenant les préformes à la température d'orientation, une machine de soufflage final comportant une pluralité de moules montés sur un second support rotatif et présentant également des empreintes appropriées et un dispositif de transfert, constitué par une chaîne sans fin équipée de supports, assurant le transfert des préformes de la machine de soufflage des préformes à la machine de soufflage final en les faisant passer au travers du dispositif de conditionnement thermique.

Dans un tel dispositif, contrairement à ce qui est décrit spécifiquement dans le brevet belge 837 324 précité, il n'est pas nécessaire de prévoir un dispositif d'ébavurage des cols des préformes en amont de la machine de soufflage final puisque les faux goulots peuvent être conservés durant l'opération de soufflage final. Toutefois, lorsque les moules équipant la machine de soufflage des préformes sont conçus de façon à produire des préformes dont les faux goulots sont fermés, comme c'est le cas, par exemple, lorsque le moulage des préformes est effectué par soufflage au moyen d'une aiguille creuse qui perce latéralement les portions successives de paraison enfermées dans les moules de préforme, il est utile de prévoir un dispositif, par exemple analogue à celui décrit dans le brevet belge 837 324, pour ouvrir ces faux goulots en amont de la machine de soufflage final, par exemple en éliminant leur partie supérieure. Ce dispositif peut toutefois être monté directement dans les moules de souf- lames mobiles qui sont actionnées après le soufflage des préformes et découpant transversalement les faux goulots moulés à une certaine distance des bagues d'orifice prévues sur les préformes.

Les supports équipant la chaîne de transfert des préformes sont, de préférence, adaptés de façon à saisir ces préformes au niveau de leur faux goulot durant les transferts. Il est toutefois possible de prévoir des supports adaptés pour supporter les préformes au-dessous de leur bague d'orifice ainsi qu'il est décrit dans le brevet belge 837 324 précité.

La machine de soufflage final peut être analogue à celle décrite dans le brevet belge 837 324. Il est préférable que les tuyères de soufflage équipant cette machine soient du même type que celui décrit dans le brevet belge 838 910 déjà mentionné plus haut.

Cette machine de soufflage final peut très avantageusement être équipée de bras radiaux extensibles pourvus à leur extrémité d'une pince adaptée de façon à venir saisir le faux goulot des préformes dont la partie supérieure àu moins déborde du moule de soufflage final. Après ouverture du moule de soufflage final, le bras radial peut être exploité pour sortir positivement le corps creux du moule, l'écarter de la machine de soufflage final et le transférer par exemple sur un transporteur qui évacue les corps creux vers une installation de décolletage où leur faux goulot est éliminé.

L'invention est illustrée par les figures des dessins annexés qui se rapportent à des moules convenant particulièrement pour réaliser le procédé selon l'invention au moyen d'un appareillage tel que celui décrit dans le brevet belge 837 324. Il est toutefois bien entendu que ces figures sont données à titre illustratif et que dès lors elles ne limitent en rien la portée de la présente invention.

Dans ces dessins,
— la figure 1 est une vue en coupe et en élévation d'un moule convenant particulièrement pour le moulage des préformes;
— la figure 2 est une vue en coupe partielle et en élévation d'un ensemble de moulage convenant pour le soufflage final des préformes obtenues à l'aide du moule de la fig. 1;
— la figure 3 est une vue en coupe partielle et en élévation analogue à celle de la fig. 2 montrant l'extraction du corps creux orienté finalement moulé.

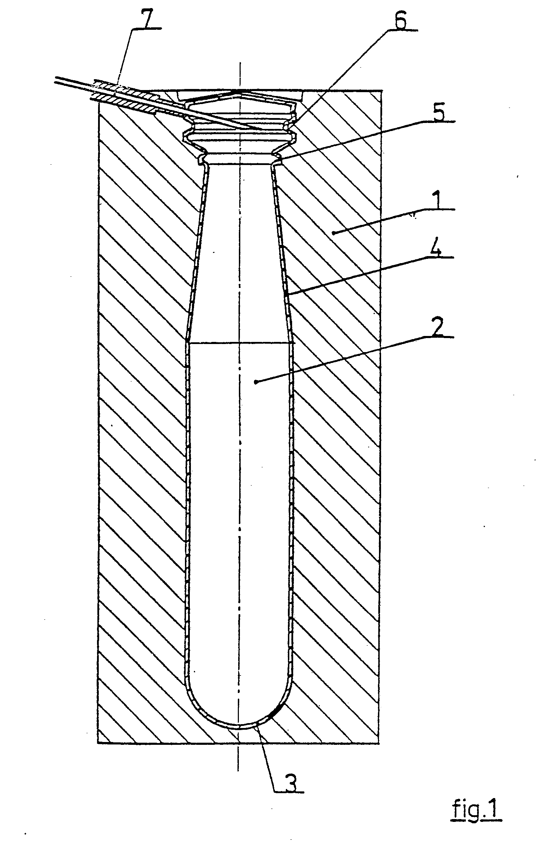

Ainsi qu'il apparaît à la fig. 1, le moule de préforme 1, qui peut être monté avec d'autres identiques sur un dispositif rotatif de moulage par soufflage non représenté, comporte une empreinte 2 dont le relief permet le moulage par soufflage à partir d'une portion de paraison tubulaire chaude de matière thermoplastique, d'une préforme comportant un fond fermé hémisphérique 3, un corps de forme générale cylindrique 4, une bague d'orifice 5 moulée dans sa forme définitive et un faux goulot fermé 6 surmontant cette bague. Le moulage de la préforme est obtenu par soufflage au moyen d'une aiguille creuse rétractible 7 qui perce la paraison dans la région destinée à former le faux goulot et qui est raccordée, de façon connue en soi, à une source de fluide sous pression non représentée. Les parois du moule 1 sont équipées de canaux de réfrigération, non représentés, dont la fonction est de refroidir la préforme moulée en vue de permettre son démoulage et éventuellement d'assurer le conditionnement thermique total ou partiel de la préforme. La longueur de la préforme moulée est sensiblement inférieure à la hauteur du corps creux orienté à produire et son diamètre est nettement inférieur au diamètre maximum de ce même corps creux.

Après moulage et réfrigération, la préforme est extraite du moule 1 et est transférée en passant au travers d'un dispositif de conditionnement thermique, vers le moule de soufflage final. Durant ce transfert, la partie supérieure de son faux goulot 6 est découpée afin d'ouvrir la partie supérieure de la préforme. Les moyens utilisés pour le transfert saisissent la préforme au niveau de son faux goulot 6 et coopèrent avec la rainure qui y est ménagée de façon que la partie supérieure du faux goulot 6 soit dégagée en vue de permettre la découpe de cette partie.

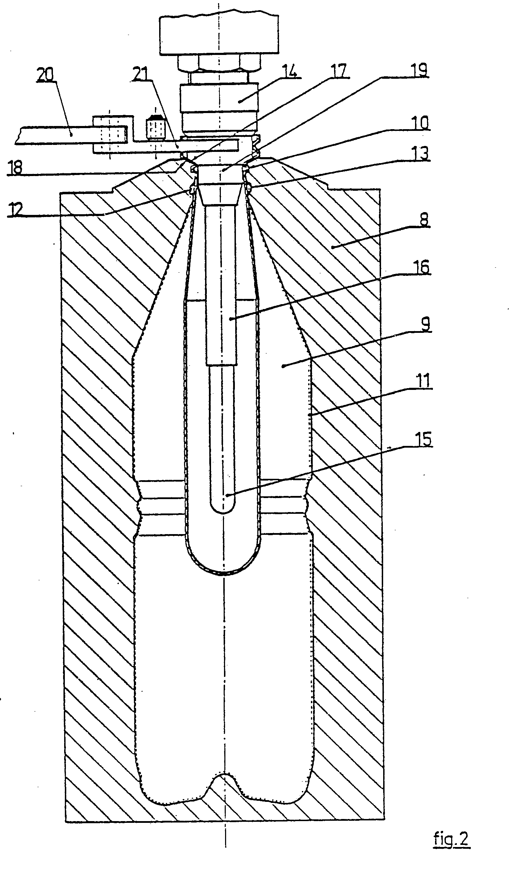

La préforme conditionnée thermiquement est introduite dans un moule de soufflage final 8 qui est représenté à la fig. 2 et est monté sur un support rotatif non représenté.

Le moule 8 comporte une empreinte 9 dont le relief présente un évidement 10 permettant le logement précis de la bague d'orifice 5 moulée dans sa forme définitive sur la préforme. L'introduction de la préforme dans le moule 8 est réalisée de façon telle que, lors de la fermeture du moule, la bague d'orifice 5 vienne se loger de façon précise dans l'évidement. Cette introduction peut notamment être assurée, par exemple grâce au dispositif de transfert des préformes, par l'intermédiaire du faux goulot 6.

L'empreinte 9 du moule 8 reproduit en creux la forme du corps creux orienté désiré 11 et comporte notamment un relief 12 permettant l'information lors du soufflage final, de la partie inférieure du col 13 du corps creux.

Le faux goulot 6 ouvert de la préforme déborde du moule 8 durant l'operation de soufflage final. Il est exploité pour assurer l'étanchéité durant le soufflage. A cet effet, la tuyère de soufflage 14 comporte un épaulement 17 qui vient s'appuyer sur la partie inférieure interne du faux goulot 6 et applique fermement celui-ci contre le bord de l'ouverture 18 du moule 8.

La tuyère de soufflage 14 comporte un manchon de calibrage 19 qui contrôle avec précision le diamètre d'ouverture du col du corps creux 11, et assure l'étanchéité et la retenue de la préforme lors du soufflage final.

Le dispositif rotatif de soufflage final est flage des préformes et être constitué par des pourvu d'une série de bras radiaux 20 extensibles qui collaborent chacun avec un moule de soufflage final 8. Les extrémités de ces bras 20 sont équipés de pinces amovibles 21 adaptées de façon à venir se fermer sur les faux goulots 6 des préformes dont la partie supérieure déborde des moules de soufflage final 8.

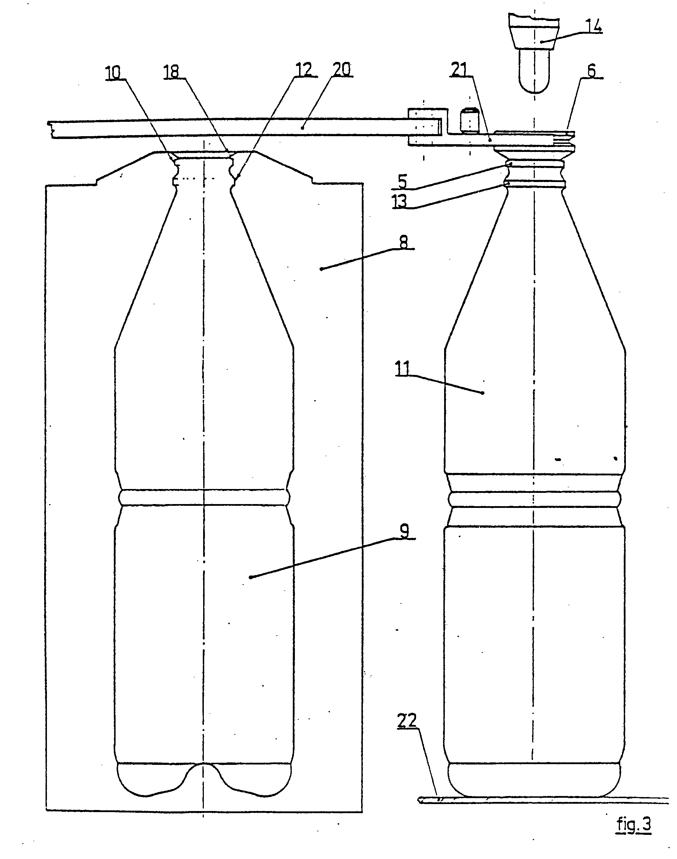

Ainsi qu'il est représenté à la fig. 3, après ouverture du moule de soufflage final 8 et retrait de la tuyère de soufflage 14, le corps creux orienté moulé 11 est maintenu par une pince 21 qui assure ainsi son démoulage de l'empreinte 9 du moule 8. Ensuite, le bras 20 peut être étendu pour sortir radialement le corps creux orienté moulé 11 de la machine de soufflage final et l'amener sur un transporteur d'évacuation 22 où il est abandonné par ouverture de la pince 21. La commande des bras radiaux peut être assurée par des moyens mécaniques tels que des cames ou par des moyens électriques, pneumatiques ou hydrauliques. Le mouvement d'extension radiale des bras 20 peut être amplifié par des dispositifs connus tels que des dispositifs à crémaillères et pignons. Les bras radiaux 20 équipés de pinces 22 peuvent également être exploités par un mouvement inverse pour assurer l'introduction des préformes conditionnées dans les moules de soufflage final 8.

Grâce à l'invention, il est aisé de réaliser avec un rendement remarquablement élevé, des corps creux orientés en matière thermoplastique sur lesquels il est aisé d'appliquer ulterieurement des fermetures, telles que des capsules, de façon très étanche et qui, de ce fait, conviennent particulièrement pour le conditionnement de boissons carbonatées telles que la bière et les limonades.

**Revendications**

1. Procédé pour la production de corps creux orientés en matière thermoplastique dont le col comporte une bague d'orifice (5) à sa partie supérieure et une partie inférieure moulée (13) dans lequel on moule des préformes (4) à partir d'une paraison tubulaire chaude de matière thermoplastique, on conditionne thermiquement les préformes (4) à une température susceptible d'induire l'orientation de la matière thermoplastique lors de son étirage, et on souffle les préformes (4) dans des moules de soufflage final (8), caractérisé en ce qu'on moule par soufflage des préformes (4) qui comportent la bague d'orifice (5) dans sa forme définitive et qui sont surmontées d'un faux goulot (6) situé au-dessus de la bague d'orifice (5) et on moule la partie inférieure (13) du col des corps creux lors du soufflage final.

2. Procédé selon la revendication 1, caractérisé en ce que la partie inférieure du col est étirée lors du soufflage final.

3. Procédé selon la revendication 2, caractérisé en ce que la partie inférieure de col est chauffée lors du conditionnement thermique à une température plus élevée que le reste des préformes.

4. Procédé selon l'une quelconque des revendications 1 à 3, caractérisé en ce que l'on utilise pour le soufflage final une tuyère (14) qui prend appui directement sur la bague d'orifice (5) pour assurer l'étanchéite.

5. Procédé selon l'une quelconque des revendications 1 à 4, caractérisé en ce que l'on fait déborder au moins la partie supérieure du faux goulot (6) du moule de soufflage final (8).

6. Procédé selon l'une quelconque des revendications 1 à 5, caractérisé en ce que l'on saisit les préformes (4) et les corps creux (11) au niveau de leur faux goulot (6) pour assurer leur transfert.

7. Procédé selon l'une quelconque des revendications 1 à 6, caractérisé en ce que l'on positionne les préformes (4) et les corps creux (11) au moyen de leur faux goulot (6).

8. Procédé selon l'une quelconque des revendications 1 à 7, caractérisé en ce que les préformes (4) sont moulées par soufflage au moyen d'une aiguille creuse rétractable (7) agissant au niveau du faux goulot (6).

9. Procédé selon l'une quelconque des revendications 1 à 8, caractérisé en ce que les préformes (4) présentent un fond hémisphérique (3) et un corps de forme générale cylindrique.

10. Procédé selon l'une quelconque des revendications 1 à 9, caractérisé en ce que l'on utilise pour le soufflage final une tuyère (14) qui prend appui sur le faux goulot (6) pour assurer l'étanchéité.

**Claims**

1. Process for the production of oriented hollow bodies which are made from a thermoplastic and whose neck possesses an orifice ring (5) at its upper part and a moulded lower part (13), in which process preforms (4) are moulded from a hot tubular parison of thermoplastic, the preforms (4) are heat-conditioned at a temperature which is capable of causing the orientation of the thermoplastic when the latter is drawn, and the preforms (4) are blown in final blowing moulds (8), characterised in that preforms (4) are blow moulded which possess the orifice ring (5) in its final shape and which at the top possess a false throat (6), located above the orifice ring (5), and the lower part (13) of the neck of the hollow bodies is moulded during the final blowing.

2. Process according to Claim 1, charactersed in that the lower part of the neck is drawn during the final blowing.

3. Process according to Claim 2, characterised in that the lower part of the neck is heated, during the heat conditioning, to a higher temperature than is the remainder of the preforms.

4. Process according to any one of Claims 1 to 3, characterised in that a nozzle (14), which rests directly against the orifice ring (5) so as to ensure that there is no leak is used for the final blowing.

5. Process according to any one of Claims 1 to 4, characterised in that at least the upper part of the false throat (6) is made to protrude from the final blowing mould (8).

6. Process according to any one of Claims 1 to 5, characterised in that the preforms (4) and the hollow bodies (11) are gripped at their false throat (6) for transfer purposes.

7. Process according to any one of Claims 1 to 6, characterised in that the preforms (4) and the hollow bodies (11) are positioned by means of their false throat (6).

8. Process according to any one of Claims 1 to 7, characterised in that the preforms (4) are blow-moulded by means of a retractable hollow needle (7) which comes into action at the level of the false throat (6).

9. Process according to any one of Claims 1 to 8, characterised in that the preforms (4) have a hemispherical base (3) and a body of cylindrical general shape.

10. Process according to any one of Claims 1 to 9, characterised in that a nozzle (14) which rests against the false throat (6) to ensure that there is no leak is used for the final blowing.

**Patentansprüche**

1. Verfahren zur Herstellung orientierter Hohlkörper aus thermoplastischem Material, deren Hals am oberen Teil eine ringförmige Austrittsöffnung (5) und ein unteres Gußteil (13) aufweist, wobei man Vorformen (4) aus einer rohrförmigen warmen Thermoplast-Schmelze formt, die Vorformen bei einer die Orientierung des thermoplastischen Materials beim Ziehen induzierenden Temperatur wärmekonditioniert und sie in endgültigen Blasformen (8) aufbläst, dadurch gekennzeichnet, daß man Vorformen (4), die die Ringöffnung (5) in der endgültigen Form und über dieser einen falschen Halsansatz (6) aufweisen, blasformt und das untere Halsteil (13) des Hohlkörpers beim endgültigen Blasen formt.

2. Verfahren nach Anspruch 1, dadurch gekennzeichnet, daß das untere Halsteil beim endgültigen Blasen gezogen wird.

3. Verfahren nach Anspruch 2, dadurch gekennzeichnet, daß das untere Halsteil beim Wärmekonditionieren auf eine höhere Temperatur als der Rest der Vorformen erwärmt wird.

4. Verfahren nach einem der Ansprüche 1 bis 3, dadurch gekennzeichnet, daß man zum endgültigen Blasen eine Blasform (14), die zwecks Dichtigkeit direkt auf der Ringöffnung (5) aufliegt, verwendet.

5. Verfahren nach einem der Ansprüche 1 bis 4, dadurch gekennzeichnet, daß man wenigstens den oberen Teil des falschen Halsansatzes (6) der endgültigen Blasform (8) wegnimmt.

6. Verfahren nach einem der Ansprüche 1 bis 5, dadurch gekennzeichnet, daß man die Vorformen (4) und die Hohlkörper (11) zu deren Transfer in Höhe ihres falschen Halsansatzes (6) ergreift.

7. Verfahren nach einem der Ansprüche 1 bis 6, dadurch gekennzeichnet, daß man die Vorformen (4) und die Hohlkörper (11) mit Hilfe ihres falschen Halsansatzes (6) positioniert.

8. Verfahren nach einem der Ansprüche 1 bis 7, dadurch gekennzeichnet, daß die Vorformen (4) mit Hilfe einer rückziebaren Hohlnadel (7), die in Höhe des falschen Halsansatzes (6) arbeitet, blasgeformt werden.

9. Verfahren nach einem der Ansprüche 1 bis 8, dadurch gekennzeichnet, daß die Vorformen (4) einen halbkugeligen Untergrund (3) und einen allgemein zylindrischen Körper aufweisen.

10. Verfahren nach einem der Ansprüche 1 bis 9, dadurch gekennzeichnet, daß man zum endgültigen Blasen eine Düse (14), die zwecks Dichtigkeit auf dem falschen Halsansatz (6) aufliegt, verwendet.

fig.1

fig.2

fig.3